# EUROPÄISCHE PATENTSCHRIFT

(11) **EP 1 089 798 B1**
(45) Veröffentlichungstag und Bekanntmachung des Hinweises auf die Patenterteilung: **23.07.2003**
(21) Anmeldenummer: 99915666.4
(22) Anmeldetag: 19.03.1999
(51) Int. Cl.: B01D 27/06, B01D 27/08, B01D 29/15

(54) **BAUKASTENSYSTEM ZUM AUFBAU VON FILTERELEMENTEN UNTERSCHIEDLICHER BAUGRÖSSEN**
MODULAR SYSTEM FOR PUTTING TOGETHER DIFFERENT SIZED FILTER ELEMENTS
SYSTEME MODULAIRE POUR CONSTITUER DES ELEMENTS FILTRANTS DE DIFFERENTES DIMENSIONS

(30) Priorität: 10.06.1998 DE 19826032
(43) Veröffentlichungstag der Anmeldung: 11.04.2001
(73) Patentinhaber: Hydac Filtertechnik GmbH, 66280 Sulzbach/Saar (DE)
(72) Erfinder: SAKRASCHINSKY, Michael, D-66386 St. Ingert (DE); HENNES, Stefan, D-66540 Neunkirchen (DE)
(74) Vertreter: Bartels, Martin Erich Arthur
(86) Internationale Anmeldenummer: EP9901829
(87) Internationale Veröffentlichungsnummer: WO99064133

(56) Entgegenhaltungen:
- EP-A- 0 487 831
- EP-A- 0 769 317
- DE-A- 3 921 369
- US-A- 3 246 920
- US-A- 5 601 711

## Beschreibung

Die Erfindung bezieht sich auf ein Baukastensystem zum Aufbau von Filterelemten unterschiedlicher Baugrößen, insbesondere Baulängen, namentlich bei Filtervorrichtungen für Hydraulikfluide, mit einem einen inneren Hohlraum des betreffenden Filterelementes definierenden, eine Filtermatte tragenden Stützrohr, das Durchlässe für den Fluiddurchtritt aufweist und dessen Mantel durch im gegenseitigen Abstand voneinander angeordnete, kreisrunde Ringe gebildet ist, die von den Flügeln eines sich im Inneren des Stützrohres axial erstreckenden, sternförmigen Profilkörpers getragen sind, und mit zumindest einem Kupplungsstück, das die endseitige Verbindung eines betreffenden Stützrohres mit einem weiteren Stützrohr ermöglicht, das eine endseitig vorgesehene Aufnahme für die Zusammenwirkung und Verriegelung mit dem Kupplungsstück aufweist, welches als Steckerelement mit einem Kranz aus Stegen ausgebildet ist, die sich in gegenseitigen Abständen in axialer Richtung erstrecken und endseits angeformte Haken zum Anschnappen an der Aufnahme des anschließenden Stützrohres aufweisen.

Ein System dieser Art ist bereits aus der EP 0769 317 A1 bekannt. Der Erfindung liegt die Aufgabe zugrunde, ein System der besagten Art zu schaffen, das sich durch besonders gute Betriebseigenschaften, namentlich eine verbesserte Strukturfestigkeit des Verbundes aus zusammengesetzten Stützkörpern auszeichnet.

Bei einem Baukastensystem der eingangs genannten Art ist diese Aufgabe erfindungsgemäß dadurch gelöst, daß der Kranz der Stege in Ausrichtung auf die Flügel des Profilkörpers verbreiterte Lücken zwischen benachbarten Stegen aufweist und diese Lücken den Eingriff der Enden der Flügel ermöglichen.

Dank der erfindungsgemäßen Ausbildung des Kranzes der die Anschnapphaken tragenden Stege kommen beim Herstellen der Verbindung die in die Lücken zwischen den Stegen eingreifenden Enden der Flügel der inneren Profilkörper unmittelbar miteinander zur Anlage. Es steht also eine sich über den gesamten Querschnitt des Profilkörpers erstreckende, vollflächige Abstützfläche zur Verfügung, über die die am Filterelement im Betrieb wirksamen Axialkräfte übertragbar sind, so daß sich die gewünschte hohe Strukturfestigkeit des aufgebauten Filterelementes ergibt.

Bei dem erfindungsgemäßen Baukastensystem können Stützrohre mit einer endseitig vorgesehenen Aufnahme für die Zusammenwirkung und Verriegelung mit dem Kupplungsstück vorhanden sein. Ebenso kommen als Bestandteile des Baukastensystems Stützrohre in Frage, die an beiden Enden eine Aufnahme für die Zusammenwirkung und Verriegelung mit einem Kupplungsstück aufweisen. Des weiteren können Stürzrohre mit nur einem endseitig daran angebrachten Kupplungsstück sowie Stützrohre mit je einem an beiden seiner Enden angebrachten Kupplungsstück vorgesehen sein.

Auch kann ein Kupplungsstück in Form eines gesonderten Adapters vorgesehen sein, der für die Zusammenwirkung und Verriegelung mit je einer Aufnahme an miteinander zu verbindenden Stützrohren vorgesehen ist.

Das erfindungsgemäße Baukastensystem eröffnet somit vielfältige Kombinationsmöglichkeiten für den Aufbau von Filterelementen der jeweils benötigten Größe.

Nachstehend ist die Erfindung anhand von in der Zeichnung dargestellten Ausführungsbeispielen im einzelnen erläutert. Es zeigen:
- Fig. 1: einen teils abgebrochen gezeichneten Längsschnitt des oberen Endes eines Filterelementes mit einem in den Innenraum seines Stützrohres eingesetzten Bypassventil;
- Fig. 2: eine schematische Darstellung von Stützrohren teils unterschiedlicher Baulängen und von Kupplungsstücken, mittels denen die Stützrohre aneinander anbringbar sind;
- Fig. 3: einen in größerem Maßstab und abgebrochen gezeichneten Längsschnitt eines an einem Stützrohr endseitig angeformten Kupplungsstückes in Form eines Steckerelementes;
- Fig. 4: eine Seitenansicht des Steckerelementes von Fig. 3;
- Fig. 5: eine Untenansicht des am Ende des Stützrohres angeformten Steckerelementes von Fig. 3 und 4;
- Fig. 6: einen abgebrochen gezeichneten Teillängsschnitt eines Steges des Steckerelementes von Fig. 3 und 4 mit einem Schnapphaken in Eingriff mit einem Ring an einer Steckeraufnahme eines weiteren Stützrohres und
- Fig. 7: eine vergrößert und abgebrochen gezeichnete Teilansicht des Steckerelementes, gesehen mit der in Fig. 5 mit X bezeichneten Blickrichtung.

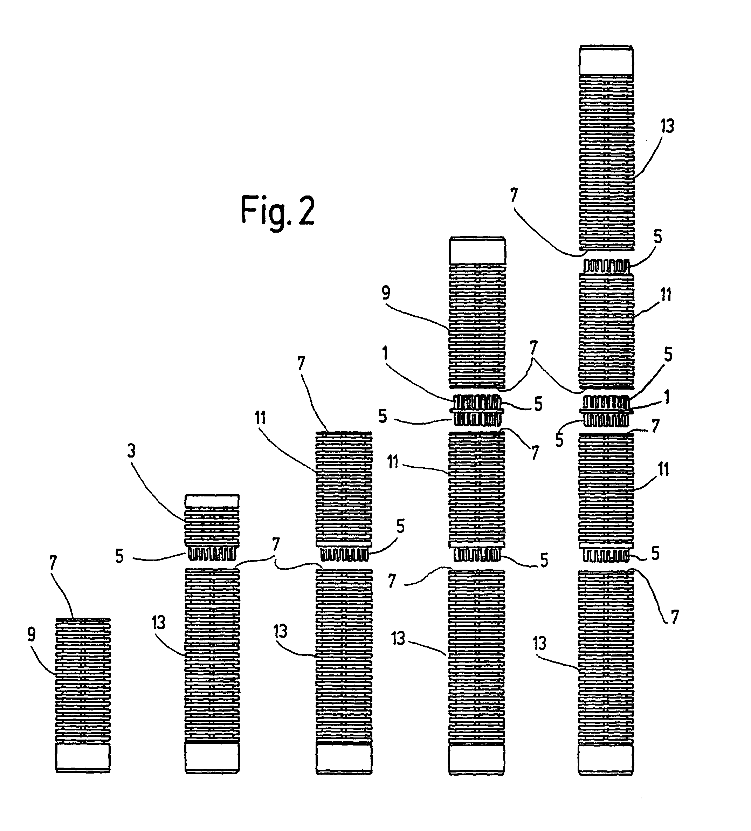

Fig. 2 zeigt in schematischer Darstellung Komponenten des erfindungsgemäßen Baukastensystems. Dabei handelt es sich jeweils um aus Polyamid-Kunststoff (PA 6) spritzgegossene Teile in Form von Stützrohren unterschiedlicher Baulängen mit endseitigen Kupplungsstücken und/oder Kupplungsstück-Aufnahmen sowie um von den Stützrohren gesonderte Kupplungsstücke in Form von Adaptern, welch letztere mit der Bezugszahl 1 bezeichnet sind. Die Bezugszahl 3 bezeichnet ein Stützrohr kurzer Baulänge mit an einem Ende befindlichem Kupplungsstück 5. Stützrohre größerer Baulänge mit an einem Ende befindlicher Kupplungsstück-Aufnahme 7 sind mit der Bezugszahl 9 bezeichnet. Stützrohre mit demgegenüber etwas kleinerer Baulänge und einem endseitigen Kupplungsstück 5 und einer Kupplungsstück-Aufnahme 7 am gegenüberliegenden Ende sind mit der Bezugszahl 11 bezeichnet. Die Bezugszahl 13 kennzeichnet Stützrohre mit demgegenüber größerer Länge mit einer endseitigen Kupplungsstück-Aufnahme 7.

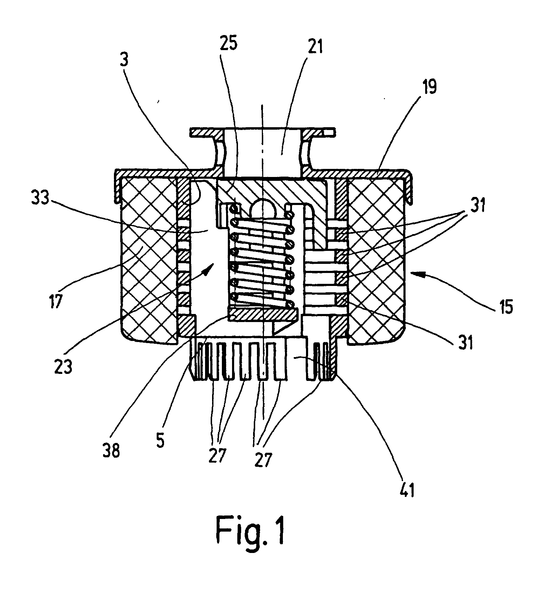

Fig. 1 zeigt in größerer Darstellung das Stützrohr 3, das dem oberen Ende eines Filterelementes 15 zugeordnet und vom oberen Teil der betreffenden Filtermatte 17 umgeben ist. Ein den oberen Abschluß bildender Deckel 19, der ebenfalls aus dem gleichen Kunststoff wie das Stützrohr 3 spritzgegossen ist, übergreift den oberen Rand der Filtermatte 17, ist mit dem Endrand des Stützrohres 3 verschweißt und bildet einen zentralen Einlaß 21 für den Fluidzutritt zu einem in den inneren Hohlraum des Sützrohres 3 integrierten Bypassventil 23, dessen Ventilkörper 25 unter Federspannung gegen den Rand des Einlasses 21 am Dekkel 19 normalerweise abdichtet.

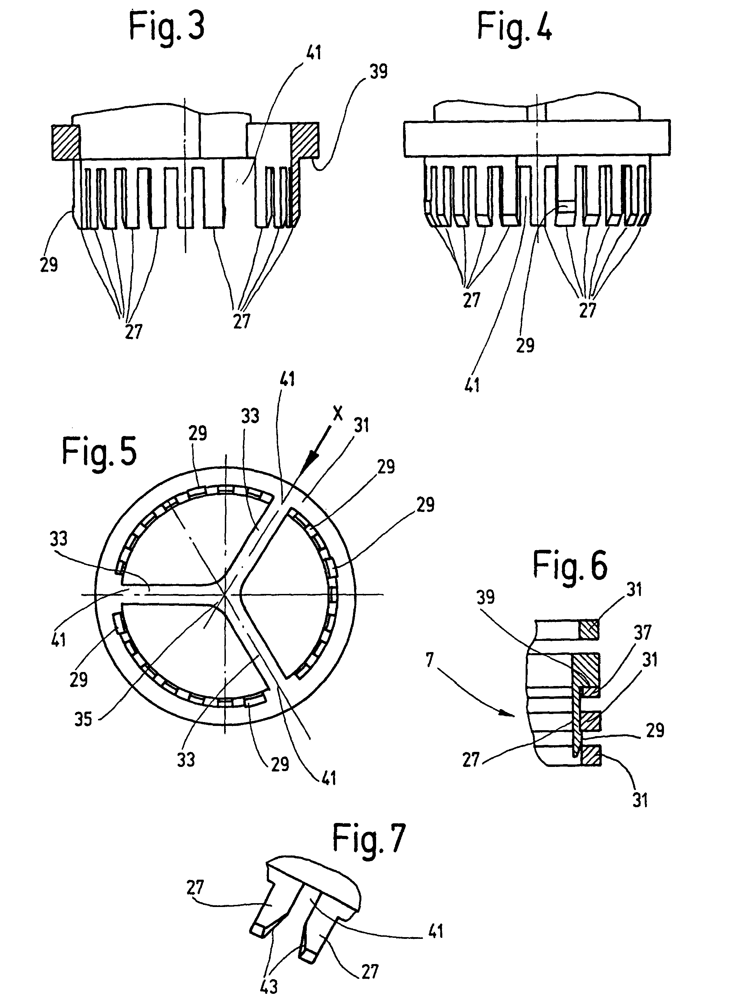

Wie aus Fig. 1 zu ersehen ist, ist das am Stützrohr 3 endseitig angeformte Kupplungsstück 5, in gleicher Weise wie die Kupplungsstücke 5 der Stützrohre 11 und die beidseits am Adapter 1 ausgebildeten Kupplungsstücke 5 jeweils als Stekkerelement gestaltet, das aus einem kreisrunden Kranz von sich axial erstreckenden Stegen 27 teils unterschiedlicher Breite gebildet ist, von denen die breiteren Stege 27 mit radial nach außen vorstehenden Schnapphaken 29 versehen sind, siehe Fig. 3 bis 6.

Wie am deutlichsten aus Fig. 2 und 6 zu ersehen ist, besteht der Mantel der Stützrohre 3, 9, 11 und 13 jeweils aus einer Folge von Ringen 31, die in axialen Abständen voneinander angeordnet sind, so daß Durchlässe für den Fluiddurchtritt gebildet werden. Wie Fig. 5 zeigt, sind bei den Stützrohren 9, 11 und 13 die Ringe 31 von den Enden der Flügel 33 eines sich im Innern des betreffenden Stützrohres axial erstreckenden, sternförmigen Profilkörpers 35 getragen. Bei dem in Fig. 1 gezeigten kurzen Stützrohr 3 bildet das Bypassventil 23 mit seinem Fußteil 38 einen Teil des inneren Profilkörpers 35, genau gesagt bildet dieser Fußteil 38 die axiale Begrenzung einer Aussparung im inneren Bereich der Flügel 33, in der das Bypassventil 23 aufgenommen ist.

Zur Bildung der Kupplungsstück-Aufnahme 7, also als Aufnahme für den eingesteckten Kranz der Stege 27 des Steckerelementes dient die Innenseite des Rohrmantels des betreffenden Stützrohres 9, 11 oder 13, wobei der jeweils endseitige, den Rohrmantel definierende Ring 37 eine gegenüber den übrigen Ringen 31 verringerte axiale Ausdehnung besitzt. Die Länge der Stege 27 des Steckerelementes, gemessen von einer Schulterfläche 39 (Fig. 3) an der Basis der Stege 27, ist so bemessen, daß die Schnapphaken 29 bei in die Aufnahme 7 eingestecktem Zustand hinter dem nächstfolgenden Ring 31 einschnappen und die Schulterfläche 39 an dem endseitigen Ring 37 anliegt, siehe Fig. 6.

Wie insbesondere aus Fig. 3, 5 und 7 zu ersehen ist, befinden sich in dem Kranz der Stege 27 drei vergrößerte Lücken 41 zwischen benachbarten Stegen 27. Diese Lücken 41 sind jeweils auf die radialen Flügel 33 des inneren Profilkörpers 35 ausgerichtet. Beim Zusammenstecken von Steckerelement und Aufnahme 7 ist damit sichergestellt, daß die Stirnflächen der Flügel 33 der inneren Profilkörper 35 aneinandergrenzender Stützrohre miteinander fluchten und somit zur gegenseitigen Anlage gelangen, so daß Axialkräfte von Stützrohr zu Stützrohr über die inneren Profilkörper 35 übertragen werden. Wie aus Fig. 7 zu ersehen ist, weisen die Stege 27 an einer der verbreiterten Lücken 41 seitliche Abschrägungen 43 als Einführhilfe beim Zusammenstecken auf.

Wie aus Fig. 2 zu ersehen ist, ergeben sich mit den Komponenten des erfindungsgemäßen Baukastensystems mannigfache Kombinationsmöglichkeiten zur Ausbildung gewünschter Stützrohrlängen, gegebenenfalls mit in das Stützrohr integriertem Bypassventil 23. Die Kupplungsstücke in Form der Adapter 1, die beidseits je ein Steckerelement mit einem Kranz von Stegen 27 besitzen, ermöglichen die gegenseitige Verbindung mit jeweils einander zugekehrten Aufnahmen 7, während die Stützrohre 3 und 11 mit endseitig angeformtem Kupplungsstück zur Zusammenwirkung mit dem als Aufnahme 7 gestalteten Ende eines anschließenden Stützrohres 9 oder 13 bestimmt sind.

## Patentansprüche

1. Baukastensystem zum Aufbau von Filterelementen (15) unterschiedlicher Baugrößen, insbesondere Baulängen, namentlich bei Filtervorrichtungen für Hydraulikfluide, mit einem einen inneren Hohlraum des betreffenden Filterelementes (15) definierenden, eine Filtermatte (17) tragenden Stützrohr (3; 9; 11; 13), das Durchlässe für den Fluiddurchtritt aufweist und dessen Mantel durch im gegenseitigen Abstand voneinander angeordnete, kreisrunde Ringe (31, 37) gebildet ist, die von den Flügeln (33) eines sich im Inneren des Stützrohres axial erstreckenden, sternförmigen Profilkörpers (35) getragen sind, und mit zumindest einem Kupplungsstück (5), das die endseitige Verbindung eines betreffenden Stützrohres mit einem weiteren Stützrohr ermöglicht, das eine endseitig vorgesehene Aufnahme (7) für die Zusammenwirkung und Verriegelung mit dem Kupplungsstück (5) aufweist, welches als Steckerelement mit einem Kranz aus Stegen (27) ausgebildet ist, die sich in gegenseitigen Abständen in axialer Richtung erstrecken und endseits angeformte Haken (29) zum Anschnappen an der Aufnahme (7) des anschließenden Stützrohres aufweisen, **dadurch gekennzeichnet, daß** der Kranz der Stege (27) in Ausrichtung auf die Flügel (33) des Profilkörpers (35) verbreiterte Lücken (41) zwischen benachbarten Stegen (27) aufweist und diese Lücken (41) den Eingriff der Enden der Flügel (33) ermöglichen.

2. Baukastensystem nach Anspruch 1, **dadurch gekennzeichnet, daß** das Stützrohr an beiden Enden eine Aufnahme für die Zusammenwirkung und Verriegelung mit einem Kupplungsstück (5) aufweist.

3. Baukastensystem nach Anspruch 1, **dadurch gekennzeichnet, daß** ein Stützrohr (3; 11) mit einem endseitig an ihm angebrachten Kupplungsstück (5) vorhanden ist.

4. Baukastensystem nach Anspruch 1, **dadurch gekennzeichnet, daß** ein Stützohr mit je einem an beiden seiner Enden angebrachten Kupplungsstück (5) vorhanden ist.

5. Baukastensystem nach einem der Ansprüche 1 bis 3, **dadurch gekennzeichnet, daß** Kupplungsstücke (5) an einem gesonderten Adapter (1) angeordnet sind, der für die Zusammenwirkung und Verriegelung mit je einer Aufnahme (7) an miteinander zu verbindenden Stützrohren (9; 11; 13) vorgesehen ist.

6. Baukastensystem nach einem der Ansprüche 1 bis 5, **dadurch gekennzeichnet, daß** jedes Stützrohr (3; 9; 11; 13) als einstückiges Spritzgußteil aus Kunststoff ausgebildet ist.

7. Baukastensystem nach einem der Ansprüche 1 bis 6, **dadurch gekennzeichnet, daß** Stützrohre (3) mit einem Kupplungsstück (5) oder einer Aufnahme und mit einem im gegenüberliegenden Endbereich im Rohrinnenraum ausgebildeten Fußteil (38) eines Bypassventiles (23) vorgesehen sind.

## Claims

1. A modular system of assembling different sized filter elements (15), especially filter elements of different lengths, more particularly filter devices for hydraulic fluids comprising a supporting tube (3; 9; 11; 13) carrying a filter mat (17), defining the inner cavity of the respective filter element (15) which has passages to let the fluid pass through and the jacket of which is formed by circular rings (31, 37) arranged at a spacing from each other, carried by the blades (33) of a star-shaped profiled body (35) axially extending within the supporting tube, and with at least one coupling piece (5) which allows the end of a supporting tube to be connected to another supporting tube with a locator (7) at its end to co-act with and lock at the coupling piece (5) which is designed as a plugging element with a crown of axially extending prongs (27) with spaces between them and having hooks (29) formed at the ends for snapping on at the locator (7) of the adjoining supporting tube, **characterised in that** the crown of prongs (27) has gaps (41) between neighbouring prongs (27) widening in the direction of the blades (33) of the profiled body (35) and that these gaps (41) allow the ends of the blades (33) to engage.

2. Modular system as in Claim 1, **characterised in that** the supporting tube has at both ends a locator for co-acting and locking with a coupling piece (5).

3. Modular system according to Claim 1, **characterised in that** a supporting tube (3; 11) has a coupling piece (5) fitted to it at the end.

4. Modular system according to Claim 1, **characterised in that** a supporting tube has a coupling piece (5) fitted to both its ends.

5. Modular system according to one of the Claims 1 to 3, **characterised in that** the coupling pieces (5) are arranged at a separate adaptor (1) provided for co-acting and locking with each locator (7) at the supporting tubes (9; 11; 13) which are to be connected together.

6. Modular system according to one of the Claims 1 to 5, **characterised in that** each supporting tube (3; 9; 11; 13) is formed as a one-piece injection moulding of plastic.

7. Modular system according to one of the Claims 1 to 6, **characterised in that** the supporting tubes (3) have one coupling piece (5) or one locator, and a foot (38) of a by-pass valve (23) formed in the opposite end within the pipe space.

## Revendications

1. Système modulaire pour constituer des éléments filtrants (15) de différentes dimensions, en particulier de différentes longueurs, notamment pour les dispositifs filtrant les fluides hydrauliques, avec un tube support (3 ; 9 ; 11 ; 13) définissant un espace creux intérieur de l'élément filtrant (15) concerné, portant une natte filtrante (17), qui comprend les traversées pour le passage du fluide, tandis son enveloppe est formée par des anneaux circulaires (31, 37) disposés à une certaine distance les uns par rapport aux autres, qui sont portés par les ailes (33) d'un corps profilé (35) en forme d'étoile s'étendant en direction axiale à l'intérieur du tube support, et avec au moins une pièce de couplage (5), qui permet la connexion d'un tube support concerné avec un autre tube support, qui comprend un logement (7) prévu du côté terminal pour l'action concourante et le verrouillage avec la pièce de couplage (5), qui est formée comme un élément enfichable avec une couronne d'ailes verticales (27), qui s'étendent en direction axiale à une certaine distance entre elles et comprennent des crochets (29) formés sur le côté terminal pour s'accrocher au logement (7) du tube de support connecté, **caractérisé en ce que** la couronne d'ailes verticales (27) comprend, en alignement sur les ailes (33) du corps profilé (35), des intervalles élargis (41) entre les ailes verticales voisines (27) et ces intervalles (41) permettent le contact des extrémités des ailes (33).

2. Système modulaire selon la revendication 1, **caractérisé en ce que** le tube support comprend, aux deux extrémités, un logement pour l'action concourante et le verrouillage avec une pièce de couplage (5).

3. Système modulaire selon la revendication 1, **caractérisé en ce qu'**un tube support (3 ; 11) est disponible avec une pièce de couplage (5) posée sur lui du côté des extrémités.

4. Système modulaire selon la revendication 1, **caractérisé en ce qu'**un tube support est disponible avec une pièce de couplage (5) posée à chacune de ses deux extrémités.

5. Système modulaire selon l'une quelconque des revendications 1 à 3, **caractérisé en ce que** les pièces de couplage (5) sont disposées sur un adaptateur séparé (1), qui est prévu pour l'action concourante et le verrouillage avec chaque logement (7) sur les tubes support (9 ; 11 ; 13) à connecter entre eux.

6. Système modulaire selon l'une quelconque des revendications 1 à 5, **caractérisé en ce que** chaque tube support (3 ; 9 ; 11 ; 13) est formé comme un composant en matière plastique injectée en une seule pièce.

7. Système modulaire selon l'une quelconque des revendications 1 à 6, **caractérisé en ce que** les tubes support (3) sont prévus avec une pièce de couplage (5) ou un logement et avec une pièce de pied (38) construite dans l'espace intérieur du tube à l'extrémité faisant face à une soupape de dérivation (23).
